# FASCICULE DE BREVET EUROPEEN

(11) **EP 4 436 856 B1**
(45) Date de publication et mention de la délivrance du brevet: **25.02.2026**
(21) Numéro de dépôt: 22826599.7
(22) Date de dépôt: 18.11.2022
(51) Int. Cl.: B61H 5/00, F16D 55/224, F16D 69/04, F16D 65/00

(54) **PORTE-GARNITURE CONFIGURE POUR EQUIPER UN SYSTEME DE FREINAGE FERROVIAIRE COMPORTANT UNE TIMONERIE DE FREINAGE, SYSTEME DE FREINAGE FERROVIAIRE POURVU D'UN TEL PORTE-GARNITURE ET VEHICULE FERROVIAIRE**
BREMSBELAGTRÄGER, KONFIGURIERT ZUM AUSSTATTEN EINER SCHIENENFAHRZEUGBREMSANLAGE, DIE EIN BREMSGESTÄNGE UMFASST, SCHIENENFAHRZEUGBREMSSYSTEM MIT EINEM SOLCHEN BREMSBELAGTRÄGER UND SCHIENENFAHRZEUG
BRAKE LINING HOLDER CONFIGURED TO EQUIP A RAILWAY BRAKING SYSTEM COMPRISING A BRAKING LINKAGE, RAILWAY BRAKING SYSTEM PROVIDED WITH SUCH A BRAKE LINING HOLDER AND RAILWAY VEHICLE

(30) Priorité: 22.11.2021 FR 2112300
(43) Date de publication de la demande: 02.10.2024
(73) Titulaire: Wabtec Hauts-de-France, 80000 Amiens (FR)
(72) Inventeur: GONCALVES, Claudino, 80620 RIBEAUCOURT (FR); GERBER-PAPIN, Denis, 80830 l'Etoile (FR)
(74) Mandataire: Santarelli
(86) Numéro de dépôt international: PCT/FR2022/052118
(87) Numéro de publication internationale: WO 2023/089280

(56) Documents cités:
- WO-A1-2020/025306
- DE-A1- 102009 006 290
- DE-A1- 2 547 522

## Description

### Domaine technique de l'invention

L'invention concerne le domaine du freinage des véhicules ferroviaires. Elle concerne plus particulièrement un porte-garniture configuré pour équiper un système de freinage ferroviaire comportant une timonerie de freinage.

L'invention concerne également un système de freinage pour véhicule ferroviaire à freins à au moins une garniture, pourvu d'une timonerie de freinage et d'au moins un porte-garniture, configuré pour agir sur des organes de freinage du véhicule, tel que par exemple des disques de frein, par l'intermédiaire de la timonerie de freinage et du au moins un porte-garniture.

L'invention concerne également un véhicule ferroviaire à freins à au moins une garniture, comportant un tel système freinage configuré pour agir sur les organes de freinage du véhicule, tel que par exemple les disques de frein.

### Etat de la technique

Les véhicules ferroviaires dits à freins à au moins une garniture sont généralement équipés de systèmes de freinage à cylindres de frein de service et/ou de parking, comportant un piston mobile sous l'effet d'un fluide sous pression, le déplacement de ce piston actionnant une timonerie de freinage et entraînant une action de freinage telle que le serrage d'un disque de frein par la ou les garnitures de cette timonerie.

Un tel système de freinage est monté sur le véhicule ferroviaire, pour être en contact avec les disques de frein ou bien avec les roues. En particulier, il peut être assujetti mécaniquement sur un bogie, ou bien sur un essieu fixé au bogie, ou encore sur un autre dispositif du type moteur d'entraînement ou boîte de vitesses montés aussi sur le bogie.

L'action de freinage engendre des efforts de freinage sur les garnitures et donc sur les portes-garnitures et plus généralement au reste du système via la timonerie de freinage. Du fait de ces efforts, qui entraînent une usure des garnitures, il est nécessaire d'une part, d'assujettir mécaniquement les garnitures sur les portes-garnitures et, d'autre part, de prévoir un mécanisme de verrouillage et de déverrouillage pour installer et désinstaller les garnitures sur les portes-garnitures.

En particulier, les figures 1 à 4 des dessins annexés montrent un exemple d'un tel système de freinage monté sur un véhicule ferroviaire.

La figure 1 illustre partiellement en vue de face ce système de freinage ferroviaire pourvu notamment d'une timonerie de freinage montée sur un disque de frein d'un véhicule ferroviaire, avec les garnitures installées fixes sur les portes-garnitures du système. Sur la figure 1, un seul porte-garniture et une seule garniture sont visibles.

La figure 2 montre le système seul, en perspective et avec une garniture montée fixe sur un porte-garniture tandis que l'autre garniture est désinstallée d'un autre porte-garniture à l'aide d'un outil.

La figure 3 est une vue partielle et de dessous de la figure 2, montrant une étape de l'action de déverrouillage du porte-garniture pour désinstaller la garniture encore présente.

La figure 4 est similaire à la figure 3, montrant une seconde étape de l'action de déverrouillage du porte-garniture, la garniture étant désinstallée.

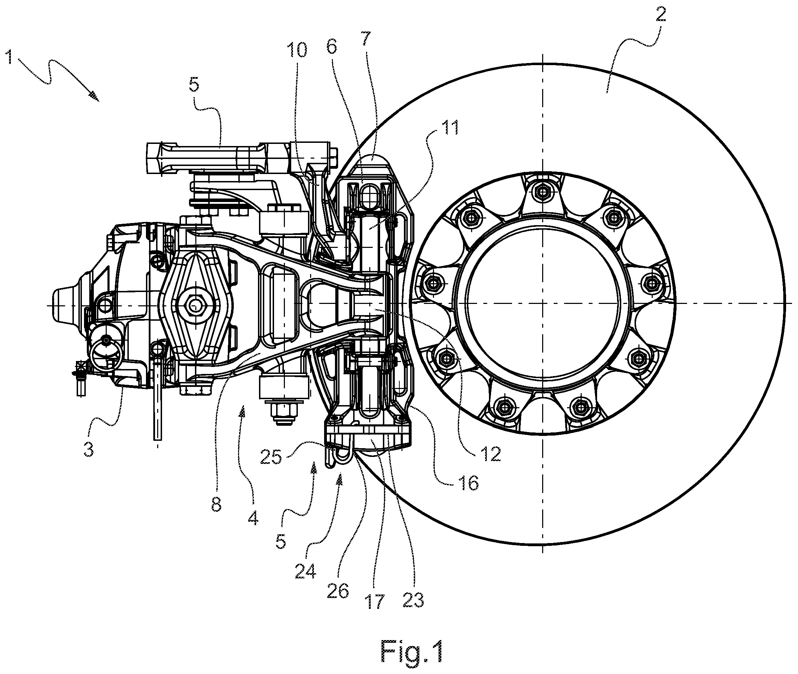

Le système de freinage ferroviaire 1 illustré sur la figure 1 est ici monté sur un disque de frein 2 d'un véhicule ferroviaire (non représenté).

Le disque de frein 2 peut être monté sur un essieu du véhicule ferroviaire, ou directement sur une roue à freiner (non visible).

Le système de freinage ferroviaire 1 comporte un corps 3 formant un cylindre de frein de service alimenté par un réseau de cheminement de conduites pneumatiques (non visible), et une timonerie de freinage 4 reliée mécaniquement au corps 3

Le corps 3 présente la forme d'une enveloppe globalement fermée qui est configurée pour être assujettie mécaniquement à un support du véhicule, par exemple une portion du bogie ou de l'essieu, via une interface de fixation 5.

Lorsque le frein de service logé dans le corps 3 est actionné, la timonerie de freinage 4 est mise en mouvement de sorte à agir sur le disque 2.

En particulier, la timonerie de freinage 4 est pourvue d'un dispositif 5 à garnitures prévu pour appliquer des efforts sur le disque de frein 2 lorsque la timonerie 4 est actionnée.

Ce dispositif 5 comporte ici deux portes-garnitures 6 sur chacun desquels sont assujetties mécaniquement des garnitures 7.

Chaque garniture 7 est prévue pour être appliquée au contact d'une face du disque 2 pour réduire sa vitesse de rotation et par conséquent celle de la roue à freiner.

La timonerie de freinage 4 comporte des leviers 8 qui s'étendent depuis le corps 3 jusqu'au dispositif 5 et à une extrémité desquels sont assujettis mécaniquement les portes- garnitures 6.

L'actionnement des leviers 8 peut permettre d'écarter ou de rapprocher les portes-garnitures 6 l'un de l'autre et vis-à-vis du disque 2.

Le système 1 comporte des biellettes de transmission d'efforts 10 assujetties mécaniquement par une première extrémité respective à l'interface de fixation 5 (elle-même assujettie au support du véhicule, non représenté) et par une seconde extrémité respective opposée à la première extrémité, à un porte-garniture respectif 6.

En particulier, chaque porte-garniture 6 est pourvu d'une patte d'attache 11 à laquelle est assujettie mécaniquement une biellette 10 respective, et d'une zone d'attache 12 à laquelle est assujettie mécaniquement un levier 8 respectif.

Un tel agencement est décrit plus en détail par exemple dans le brevet francais FR 3 102 129. Le document WO 2020/025306 A1 décrit un système pour faciliter l'actionnement d'un organe de déverrouillage d'un porte-garniture au moyen d'un outil spécial en forme de levier.

Le dispositif 5, dont les portes-garnitures 6 et les garnitures 7, présentent une orientation générale longitudinale et une orientation générale transversale.

Les garnitures 7 sont pourvues chacune d'une face d'attaque 13 configurée pour être au contact du disque de frein et d'une face de montage 14 sur laquelle est ménagée une nervure de fixation 15 qui s'étend longitudinalement et qui présente ici une forme en queue d'aronde.

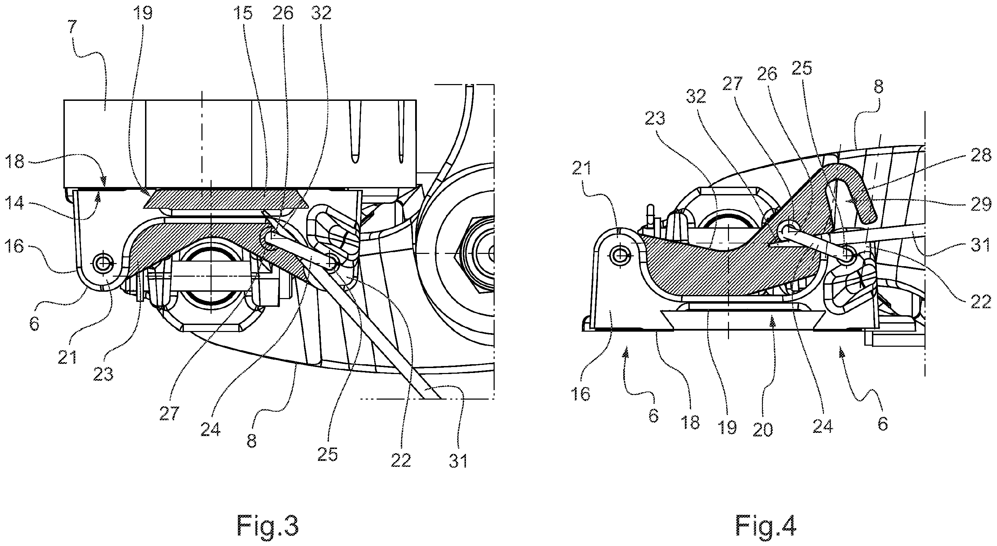

Les portes-garnitures 6 sont pourvus chacun d'une plaque principale 16 ayant une face externe 17 sur laquelle sont ménagées la patte d'attache 11 et la zone d'attache 12, et une face interne 18 opposée à la face externe 17 et sur laquelle est ménagée une rainure longitudinale 19 (visible figures 3 et 4).

La rainure longitudinale 19 présente une forme complémentaire de la nervure de fixation 15 d'une garniture 7 respective, et est configurée pour recevoir à coulissement cette nervure de fixation 15 respective pour l'installation de la garniture 7 respective sur le porte-garniture 6 respectif.

Les portes-garnitures 6 sont en outre pourvus chacun d'une fenêtre 20 ménagée dans la plaque 16 et débouchant de part d'autre dans les faces interne et externe 18 et 17 et dans la rainure longitudinale 19 ménagée dans la face interne 18.

Les portes-garnitures 6 sont en outre pourvus chacun d'une première protubérance 21 et d'une deuxième protubérance 22 ménagées en saillie de la face externe 17 de la plaque 16 et disposées de part et d'autre de la fenêtre 20, selon la direction transversale du porte-garniture 6 respectif.

Dans l'exemple illustré, les portes-garnitures 6 sont agencés de sorte que la zone d'attache 12 est interposée entre la patte d'attache 11 et les première et deuxième protubérances 21 et 22.

Les première et deuxième protubérances 21 et 22 présentent chacune une forme de charnons.

Les portes-garnitures 6 sont en outre pourvus chacun d'un organe de verrouillage et de déverrouillage 23 monté articulé sur la première protubérance 21 et s'étendant selon la direction transversale depuis la première protubérance 21 jusqu'à la deuxième protubérance 22.

Les portes-garnitures 6 sont en outre pourvus chacun d'un organe de sécurité 24 formé ici par un élément ressort filaire, du type épingle, dont une première portion 25 est assujettie mécaniquement à la deuxième protubérance 22, et une deuxième portion 26 est assujettie mécaniquement à l'organe de verrouillage et de déverrouillage 23.

En particulier, la première portion 25 de l'organe de sécurité 24 est introduite et fixée dans les charnons formés par la deuxième protubérance 22, tandis que la deuxième portion 26 est introduite et fixée dans un orifice 27 ménagé dans l'organe de verrouillage et de déverrouillage 23.

L'organe de verrouillage et de déverrouillage 23 présente à une extrémité opposée à celle par laquelle il est articulé à la première protubérance 21, un doigt 28 en forme de crochet qui définit un espace 29 pour le passage de la première portion 25 de l'organe de sécurité 24 lorsque le porte-garniture 6 respectif est dans une configuration verrouillée (comme sur les figures 1 et 3).

Dans une telle configuration verrouillée, une portion de l'organe de verrouillage et de déverrouillage 23 passe au travers de la fenêtre 20 et vient en appui serré contre une portion de la nervure de fixation 15 de la garniture 7 respective, de sorte à maintenir cette dernière en position sur le porte-garniture 6 respectif.

En outre, dans une telle configuration verrouillée, le doigt 28 de l'organe de verrouillage et de déverrouillage 23 est introduit dans les charnons formés par la deuxième protubérance 22, avec la première portion 25 de l'organe de sécurité 24 qui est reçue dans l'espace 29 défini par le doigt 28.

Dans cette configuration verrouillée, les points d'attache de l'organe de sécurité 24 sont tels que cet organe se trouve dans une première position stable dans laquelle il sollicite l'organe de verrouillage et de déverrouillage 23 contre la garniture 7 respective.

L'organe de verrouillage et de déverrouillage 23 et l'organe de sécurité 24 forment ensemble le mécanisme de verrouillage et de déverrouillage pour installer et désinstaller les garnitures sur les portes-garnitures.

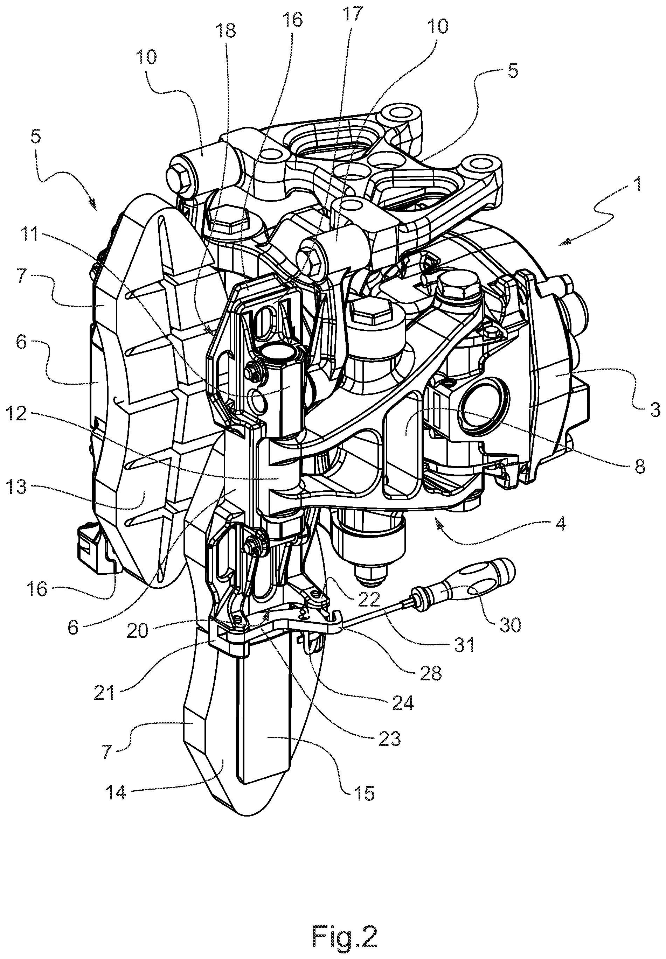

Pour remplacer une garniture 7, il est nécessaire d'utiliser un outil, par exemple du type tournevis, en vue de passer le porte-garniture 6 respectif de sa configuration verrouillée (figures 1 et 3) à une configuration déverrouillée (figures 2 et 4).

En particulier, un tournevis 30 muni d'une tige 31 est utilisé. La tige 31 du tournevis 30 est pourvue d'une extrémité 32 qui est introduite entre les première et deuxième portions 25 et 26 de l'organe de sécurité 24, en dehors de la deuxième protubérance 22, de sorte à prendre appui sur la première portion 25 et solliciter la deuxième portion 26 en vue d'une part, d'écarter l'organe de verrouillage et de déverrouillage 23 de la garniture 7 et d'autre part, d'extraire le doigt 28 de la deuxième protubérance 22.

Une force suffisante doit être exercée pour déplacer suffisamment la deuxième portion 25 de l'organe de sécurité 24 jusqu'à ce que cette dernière ne sollicite plus l'organe de verrouillage et de déverrouillage 23 vers la garniture 7.

Les figures 2 à 4 montrent l'orientation générale du tournevis 30 qui doit être positionné selon la direction transversale d'extension du porte-garniture et de la garniture, quasiment complètement en déport de ces derniers, pour passer le porte-garniture de sa configuration verrouillée à sa configuration déverrouillée.

Dans la configuration déverrouillée, les points d'attache de l'organe de sécurité 24 sont tels que cet organe se trouve dans une deuxième position stable dans laquelle il sollicite l'organe de verrouillage et de déverrouillage 23 à distance de la garniture 7 respective.

Autrement dit, la garniture 7 peut ainsi être désinstallée du porte-garniture 6 respectif pour son remplacement.

Une fois la garniture 7 remplacée, le passage du porte-garniture de sa configuration déverrouillée à sa configuration verrouillée peut se faire en appuyant directement, avec un outil, sur l'organe de verrouillage et de déverrouillage 23 en direction de la fenêtre 20.

### Exposé de l'invention

L'invention concerne un porte-garniture configuré pour équiper un système de freinage ferroviaire comportant une timonerie de freinage, du type de celui-décrit plus haut, et qui soit simple, commode et économique.

L'invention a ainsi pour objet, sous un premier aspect, un porte-garniture configuré pour équiper un système de freinage ferroviaire pour véhicule ferroviaire et pour agir sur au moins un organe de freinage dudit véhicule ferroviaire, comportant une plaque principale ayant une face externe et une face interne opposée à la face externe, un organe de montage ménagé sur la face interne et configuré pour recevoir un organe de montage complémentaire d'une garniture équipant le système de freinage ferroviaire, et un mécanisme de verrouillage et de déverrouillage configuré pour installer/désinstaller et verrouiller/déverrouiller la garniture sur le porte-garniture, le mécanisme de verrouillage et de déverrouillage comportant un organe de verrouillage et de déverrouillage monté articulé vis-à-vis de la plaque principale et s'étendant selon une direction transversale du porte-garniture, et un organe de sécurité assujetti mécaniquement d'une part à la plaque principale et d'autre part à l'organe de verrouillage et de déverrouillage, avec le porte-garniture qui est configuré pour admettre une configuration verrouillée dans laquelle l'organe de sécurité sollicite l'organe de verrouillage et de déverrouillage vers la plaque principale dans une position de verrouillage où l'organe de verrouillage et de déverrouillage est configuré pour être en appui contre la garniture, et une configuration déverrouillée dans laquelle l'organe de sécurité sollicite l'organe de verrouillage et de déverrouillage pour le mettre à distance de la plaque principale dans une position de déverrouillage où l'organe de verrouillage et de déverrouillage est configuré pour être à distance de la garniture, le porte-garniture étant caractérisé en ce que l'organe de verrouillage et de déverrouillage est pourvu d'une portion de préhension qui s'étend en saillie et transversalement au-delà de la plaque principale, et qui est configurée pour déplacer ensemble l'organe de verrouillage et de déverrouillage et l'organe de sécurité pour passer le porte-garniture de l'une à l'autre de ses configurations verrouillée et déverrouillée, sous l'effet d'une sollicitation extérieure.

Grâce à la portion de préhension du porte-garniture selon l'invention, il est particulièrement aisé de passer le porte-garniture de l'une à l'autre de ses configurations verrouillée et déverrouillée.

Du fait des efforts mis en jeu dans système de freinage ferroviaire, la sollicitation extérieure peut être appliquée par un utilisateur, à l'aide d'un outil, comme par exemple un tournevis.

Par ailleurs, du fait de la présence de la portion de préhension, il est plus commode d'agir directement sur cette portion de préhension que sur l'organe de sécurité.

Au surplus, le fait que la portion de préhension s'étende en saillie et transversalement au-delà de la plaque principale du porte-garniture rend particulièrement commode son actionnement, même malgré l'outil.

Il est en effet possible de positionner l'outil selon une direction principale longitudinale de la plaque principale pour accéder à la portion de préhension, nécessitant ainsi un espace réduit autour du porte-garniture.

Des caractéristiques préférées, simples, commodes et économiques du porte-garniture selon l'invention sont présentées ci-après.

La portion de préhension peut être formée par un organe de manipulation qui présente une face de verrouillage et une face de déverrouillage opposée à la face de verrouillage.

La face de verrouillage et la face de déverrouillage peuvent présenter une forme globalement incurvée, par exemple concave dirigée vers l'organe de manipulation, configurée pour faciliter le positionnement d'un outil.

La portion de préhension peut être formée par une patte de manipulation ayant un orifice traversant pour l'introduction d'un outil.

La portion de préhension peut être formée par une tige de manipulation fixée solidairement dans un trou ménagé dans l'organe de verrouillage et de déverrouillage, tige de manipulation contre laquelle vient en appui un outil pour faire passer le porte-garniture de l'une à l'autre de ses configurations verrouillée et déverrouillée.

Le porte-garniture peut comporter une première protubérance et une deuxième protubérance ménagées en saillie de la face externe, et l'organe de verrouillage et de déverrouillage est monté articulé sur la première protubérance et s'étend selon la direction transversale depuis la première protubérance jusqu'à la deuxième protubérance.

Le porte-garniture peut comporter une fenêtre ménagée dans la plaque principale et débouchant de part d'autre dans la face interne et dans la face externe et située en regard de l'organe de montage.

La première protubérance et la deuxième protubérance peuvent être disposées de part et d'autre de la fenêtre, selon une direction transversale du porte-garniture.

Le porte-garniture peut être pourvu d'une butée de positionnement qui saille de la face externe de la plaque principale et qui s'étend ici à distance de la deuxième protubérance.

La butée de positionnement peut se trouver sensiblement en regard de la deuxième protubérance et au moins partiellement en vis-à-vis de la portion de préhension.

La butée de positionnement présente une forme sensiblement incurvée vers la deuxième protubérance de sorte à former un logement configuré pour accueillir une extrémité d'un outil.

Le porte-garniture peut être pourvu d'une paroi formant obstacle qui saille de la face externe de la plaque principale et qui s'étend à proximité immédiate de la deuxième protubérance.

L'organe de sécurité peut être formé par un élément ressort filaire, du type épingle, dont une première portion est assujettie mécaniquement à la deuxième protubérance et une deuxième portion est assujettie mécaniquement à l'organe de verrouillage et de déverrouillage.

La paroi formant obstacle peut s'étendre entre la première portion de l'organe de sécurité partiellement introduite dans la deuxième protubérance et la deuxième portion de l'organe de sécurité partiellement introduite dans un orifice ménagé dans l'organe de verrouillage et de déverrouillage, de sorte que la paroi formant obstacle empêche l'accès à un espace ménagé entre la première portion et la deuxième portion de l'organe de sécurité.

L'organe de verrouillage et de déverrouillage peut présenter à une extrémité opposée à celle par laquelle il est articulé à la plaque principale, un doigt en forme de crochet qui définit un espace pour le passage de la première portion de l'organe de sécurité lorsque le porte-garniture est dans sa configuration verrouillée.

La portion de préhension peut s'étendre en saillie du doigt de sorte que dans la configuration verrouillée du porte-garniture, la portion de préhension s'étend au-delà de la deuxième protubérance et est accessible aisément.

L'organe de montage est formé par une rainure longitudinale par exemple en forme de queue d'aronde, formée dans la face interne.

L'invention a aussi pour objet, sous un deuxième aspect, un système de freinage pour véhicule ferroviaire à freins à au moins une garniture, pourvu d'une timonerie de freinage et d'au moins un porte-garniture tel que décrit ci-dessus, le système étant configuré pour agir sur des organes de freinage du véhicule, tel que par exemple des disques de frein, par l'intermédiaire de la timonerie de freinage et du au moins un porte-garniture sur lequel est installée et verrouillée au moins une garniture.

L'invention a aussi pour objet, sous un troisième aspect, un véhicule ferroviaire à freins à au moins une garniture, comportant un système freinage tel que décrit ci-dessus, qui est configuré pour agir sur les organes de freinage du véhicule, tel que par exemple les disques de frein.

### Brève description des figures

On va maintenant poursuivre l'exposé de l'invention par la description d'exemples de réalisation, donnée ci-après à titre illustratif et non limitatif, en référence aux dessins annexés.
La figure 1 décrite ci-dessus illustre partiellement en vue de face ce système de freinage ferroviaire pourvu notamment d'une timonerie de freinage montée sur un disque de frein d'un véhicule ferroviaire, avec les garnitures, dont une seule est visible, installées fixes sur les portes-garnitures, dont un seul est visible, du système.
La figure 2 décrite ci-dessus montre le système seul, en perspective et avec une garniture montée fixe sur un porte-garniture et une autre garniture désinstallée d'un autre porte-garniture à l'aide d'un outil.
La figure 3 décrite ci-dessus est une vue partielle et de dessous de la figure 2, montrant une étape de l'action de déverrouillage du porte-garniture pour désinstaller la garniture encore présente.
La figure 4 décrite ci-dessus est similaire à la figure 3, montrant une seconde étape de l'action de déverrouillage du porte-garniture, la garniture étant désinstallée.

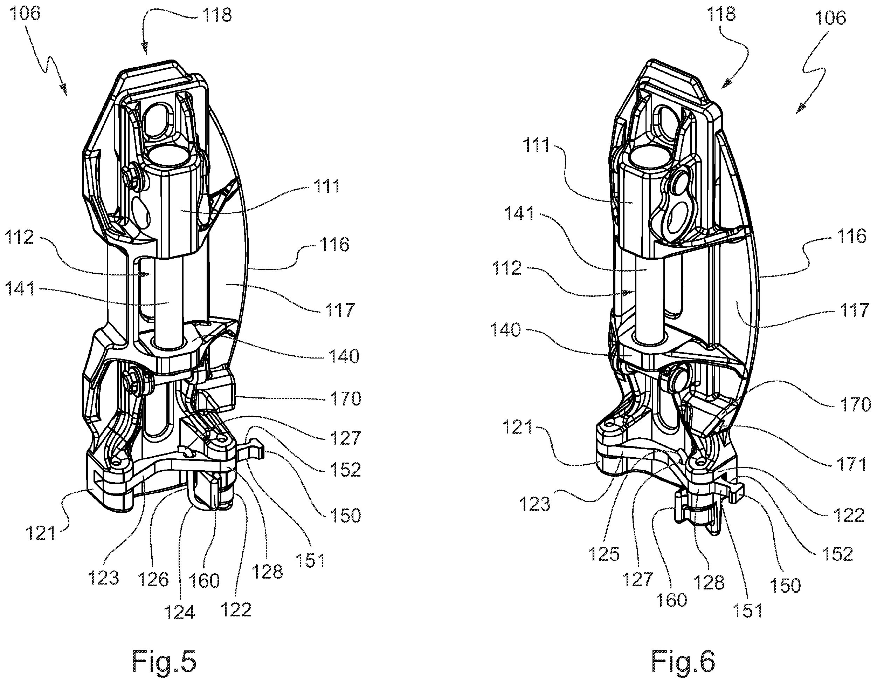

La figure 5 illustre en perspective et de manière isolée, un porte-garniture configuré pour équiper un système et prévu pour supporter une garniture, tels que décrits en référence aux figures 1 à 4, selon un mode de réalisation de l'invention.
La figure 6 est une vue similaire à celle de la figure 5, montrant le porte-garniture selon un angle de vue différent.

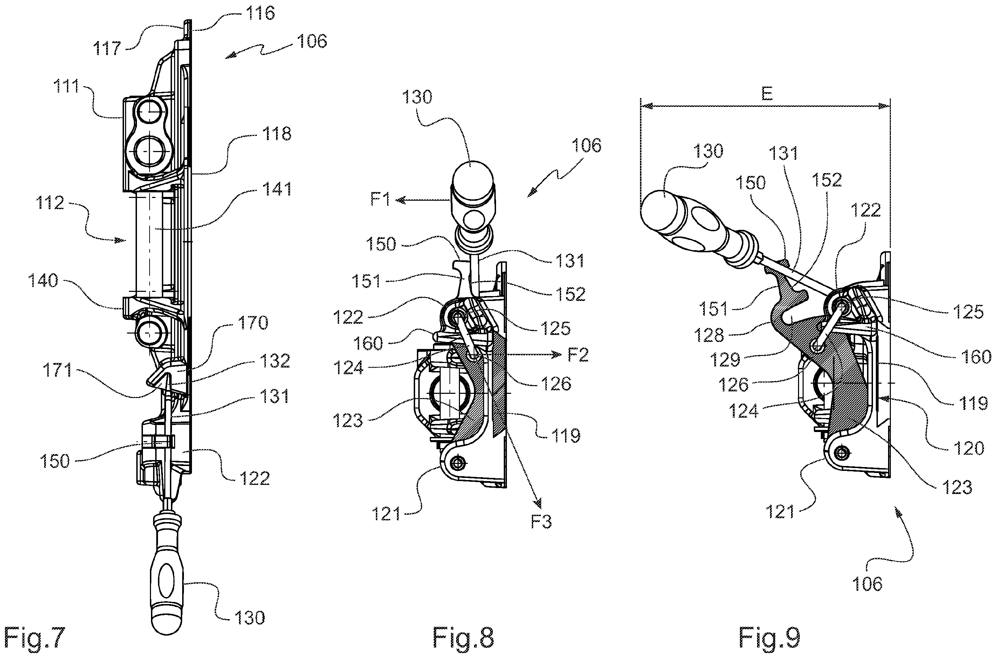

La figure 7 est une vue de côté du porte-garniture illustré sur les figures 5 et 6, avec un outil en prise sur ce dernier dans une première position de déverrouillage du porte-garniture.
La figure 8 est similaire à la figure 7, mais montrant en vue de dessous le porte-garniture avec l'outil en prise sur ce dernier dans sa première position de déverrouillage.
La figure 9 est similaire à la figure 8, mais avec le porte-garniture en configuration déverrouillée et l'outil dans une deuxième position de déverrouillage.

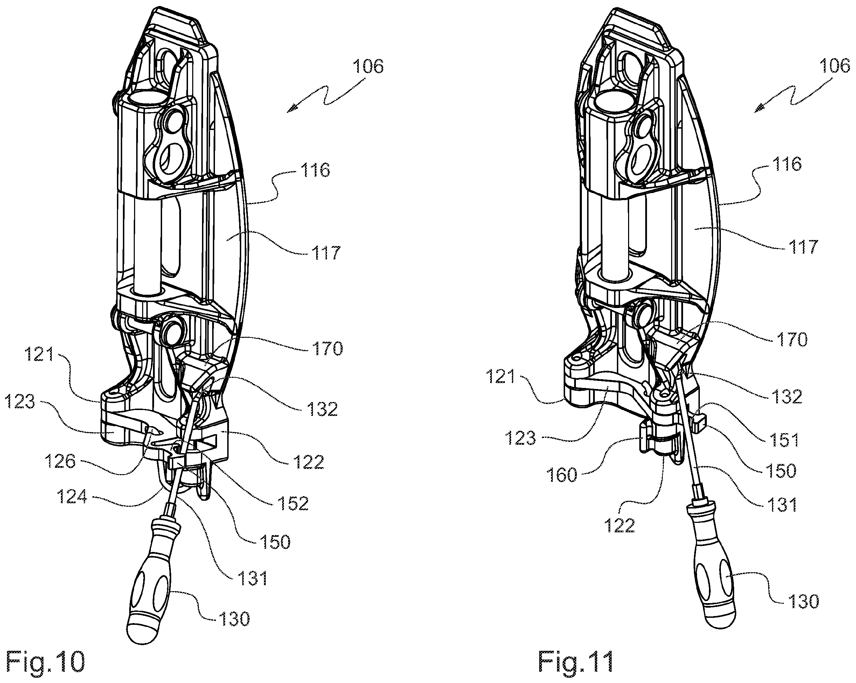

La figure 10 illustre en perspective le porte-garniture, dans sa configuration déverrouillée, et l'outil comme sur la figure 8 dans sa deuxième position de déverrouillage.
La figure 11 est similaire à la figure 10, sauf que le porte-garniture est en configuration verrouillée et l'outil est en prise sur ce dernier dans une deuxième position de verrouillage du porte-garniture.

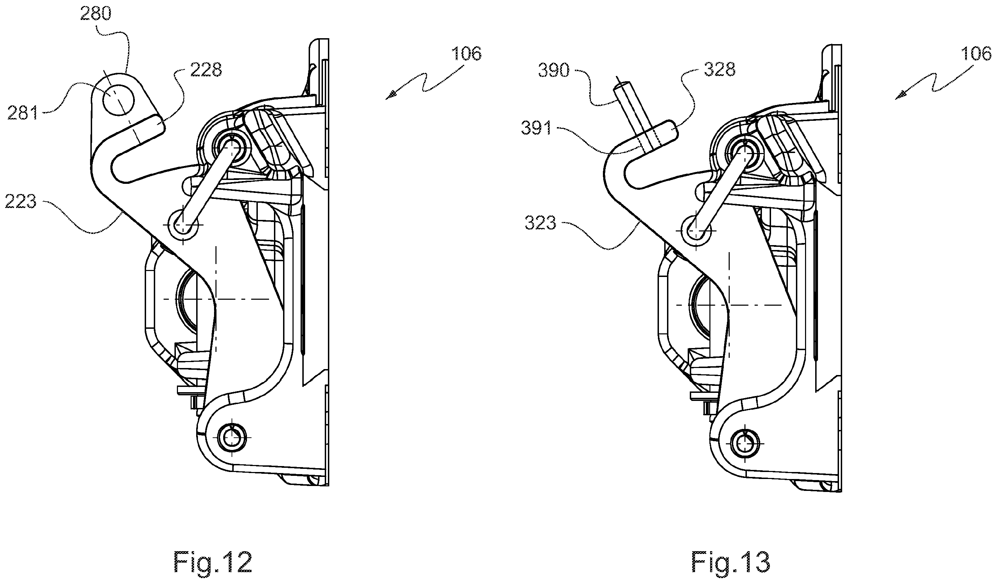

La figure 12 illustre en vue de dessous un porte-garniture selon une variante de réalisation.
La figure 13 est une vue similaire à celle de la figure 12, montrant une autre variante de réalisation du porte-garniture.

### Description détaillée

Ainsi qu'expliqué ci-dessus, les figures 1 à 4 illustrent un système de freinage ferroviaire de l'art antérieur.

Cependant, la description qui suit des figures 5 à 13 vise un porte-garniture qui est configuré pour être monté sur un système de freinage ferroviaire tel que décrit ci-dessus, en lieu et place du porte-garniture décrit en référence à ces figures.

Une description moins détaillée, basée sur celle faite dans la partie reflétant l'art antérieur, sera donc faite d'un tel système de freinage ferroviaire avant de décrire plus en détail le porte-garniture visible sur les figures 5 à 13.

En particulier, il peut s'agir d'un système de freinage ferroviaire monté sur un disque de frein d'un véhicule ferroviaire.

Le disque de frein peut être monté sur un essieu du véhicule ferroviaire, ou directement sur une roue à freiner.

Le système de freinage ferroviaire peut comporter un corps formant un cylindre de frein de service et/ou un cylindre de frein de parking, alimenté par un réseau de cheminement de conduites pneumatiques, et une timonerie de freinage reliée mécaniquement au corps.

Le corps peut présenter la forme d'une enveloppe globalement fermée qui est configurée pour être assujettie mécaniquement à un support du véhicule, par exemple une portion du bogie ou de l'essieu, via une interface de fixation.

Lorsque le frein de service et/ou le frein de parking est actionné, la timonerie de freinage est mise en mouvement de sorte à agir sur le disque.

En particulier, la timonerie de freinage est pourvue d'un dispositif à garnitures prévu pour appliquer des efforts sur le disque de frein lorsque la timonerie est actionnée.

Ce dispositif comporte deux portes-garnitures sur chacun desquels sont assujetties mécaniquement des garnitures.

Le dispositif, dont les portes-garnitures et les garnitures, présentent une orientation générale longitudinale et une orientation générale transversale.

Chaque garniture est prévue pour être appliquée au contact d'une face du disque pour réduire sa vitesse de rotation et par conséquent celle de la roue à freiner.

La timonerie de freinage peut comporter des leviers qui s'étendent depuis le corps jusqu'au dispositif et à une extrémité desquels sont assujettis mécaniquement les portes- garnitures.

L'actionnement des leviers peut permettre d'écarter ou de rapprocher les portes-garnitures l'un de l'autre et vis-à-vis du disque.

Le système peut comporter des biellettes de transmission d'efforts assujetties mécaniquement par une première extrémité respective à l'interface de fixation (elle-même assujettie au support du véhicule) et par une seconde extrémité respective opposée à la première extrémité, à un porte-garniture respectif.

Les garnitures sont pourvues chacune d'une face d'attaque configurée pour être au contact du disque de frein et d'une face de montage sur laquelle est ménagée une nervure de fixation qui s'étend longitudinalement et qui peut présenter une forme en queue d'aronde.

En référence aux figures 5 à 11, il est maintenant décrit le porte-garniture 106 conforme à l'invention, ainsi que l'installation et la désinstallation, le verrouillage et le déverrouillage, de la garniture (non représentée) sur le porte-garniture 106.

En particulier, le porte-garniture 106 est ici pourvu d'une plaque principale 116 présentant une face externe 117 et une face interne 118 opposée à la face externe 117.

Sur la face externe 117 de la plaque principale 116 sont ménagées une patte d'attache 111 pour l'assujettissement mécanique de la biellette, une zone d'attache 112 pour l'assujettissement mécanique du levier, et un socle de montage 140, avec la zone d'attache 112 qui est interposée entre le socle de montage 140 et la patte d'attache 111.

Le porte-garniture 106 comporte un axe de montage 141 s'étendant longitudinalement dans la zone d'attache 112, depuis le socle de montage 140 jusqu'au niveau de la patte d'attache 112 où il est introduit dans un orifice ménagé dans la patte d'attache 112.

L'axe de montage 141 est prévu pour l'assujettissement mécanique du levier.

Le porte-garniture 106 comporte en outre un organe de montage formé ici par une rainure longitudinale 119 formée dans la face interne 118, par exemple en forme de queue d'aronde, et complémentaire d'un organe de montage complémentaire formé par exemple par une nervure de fixation de la garniture, et prévue pour recevoir à coulissement cette nervure de fixation pour l'installation de la garniture sur le porte-garniture 106, du côté de sa face interne 118.

Le porte-garniture 116 est en outre pourvu d'une fenêtre 120 ménagée dans la plaque principale 116 et débouchant de part d'autre dans les faces interne et externe 118 et 117 et dans la rainure longitudinale 119 ménagée dans la face interne 118.

Le porte-garniture 116 est en outre pourvu d'une première protubérance 121 et d'une deuxième protubérance 122 ménagées en saillie de la face externe 117 de la plaque principale 116.

La première protubérance 121 et la deuxième protubérance 122 sont ici disposées de part et d'autre de la fenêtre 120, selon la direction transversale du porte-garniture 106.

Le porte-garniture 106 est ici agencé de sorte que la zone d'attache 112 et le socle de montage 140 sont interposés entre la patte d'attache 111 et les première et deuxième protubérances 121 et 122.

Les première et deuxième protubérances 121 et 122 présentent chacune une forme de charnons, ayant chacun un charnon supérieur et un charnon inférieur à distance l'un de l'autre.

Le porte-garniture 106 est en outre pourvu d'un organe de verrouillage et de déverrouillage 123 monté articulé sur la première protubérance 121, entre ses charnons supérieur et inférieur, et s'étendant selon la direction transversale depuis la première protubérance 121 jusqu'à la deuxième protubérance 122.

Le porte-garniture 106 est en outre pourvu d'un organe de sécurité 124 formé ici par un élément ressort filaire, du type épingle, dont une première portion 125 est assujettie mécaniquement à la deuxième protubérance 122 et une deuxième portion 126 est assujettie mécaniquement à l'organe de verrouillage et de déverrouillage 123.

En particulier, la première portion 125 de l'organe de sécurité 124 est introduite et fixée entre les charnons supérieur et inférieur formés par la deuxième protubérance 122, tandis que la deuxième portion 126 est introduite et fixée dans un orifice 127 ménagée dans l'organe de verrouillage et de déverrouillage 123.

L'organe de sécurité 124 présente ici une forme générale en U, avec les première et deuxième portions 125 et 126 qui forment les branches du U.

L'organe de verrouillage et de déverrouillage 123 présente à une extrémité opposée à celle par laquelle il est articulé à la première protubérance 121, un doigt 128 en forme de crochet qui définit un espace 129 pour le passage de la première portion 125 de l'organe de sécurité 124 lorsque le porte-garniture 106 est dans une configuration verrouillée (comme sur les figures 5 à 8 et 11).

Dans une telle configuration verrouillée, une portion de l'organe de verrouillage et de déverrouillage 123 passe au travers de la fenêtre 120 et vient en appui serré contre une portion de la nervure de fixation de la garniture (non visible ici), de sorte à maintenir cette dernière en position sur le porte-garniture 106.

En outre, dans une telle configuration verrouillée, le doigt 128 de l'organe de verrouillage et de déverrouillage 123 est introduit dans les charnons supérieur et inférieur formés par la deuxième protubérance 122, avec la première portion 125 de l'organe de sécurité 124 qui est reçue dans l'espace 129 défini par le doigt 128.

Dans cette configuration verrouillée, les points d'attache de l'organe de sécurité 124 sont tels que cet organe se trouve dans une première position stable dans laquelle il sollicite l'organe de verrouillage et de déverrouillage 123 contre la garniture (non visible).

L'organe de verrouillage et de déverrouillage 123 est en outre pourvu d'un organe de manipulation 150, ou portion de préhension, s'étendant en saillie du doigt 128 de sorte que dans la configuration verrouillée du porte-garniture 106, l'organe de manipulation 150 s'étend au-delà de la deuxième protubérance 122 et est accessible aisément.

L'organe de manipulation 150 présente une face de verrouillage 151 et une face de déverrouillage 152 opposée à la face de verrouillage 151, chacune d'elle s'étendant depuis le doigt 128.

Les faces de verrouillage et déverrouillage 151 et 152 présentent ici une forme globalement incurvée, plutôt concave dirigée vers l'organe de manipulation.

Le porte-garniture 106 est en outre pourvu, dans l'exemple illustré, d'une paroi 160 formant obstacle qui saille de la face externe 117 de la plaque principale 116 et qui s'étend à proximité immédiate de la deuxième protubérance 122.

Le porte-garniture 106 est agencée de sorte que la paroi 160 formant obstacle s'étend entre la première portion 125 de l'organe de sécurité 124 partiellement introduite dans la deuxième protubérance 122 et la deuxième portion 126 de l'organe de sécurité 124 partiellement introduite dans l'orifice 127 ménagé dans l'organe de verrouillage et de déverrouillage 123.

Ainsi, la paroi 160 formant obstacle empêche l'accès à un espace ménagé entre la première portion 125 et la deuxième portion 126 de l'organe de sécurité 124.

Le porte-garniture 106 est en outre pourvu, dans l'exemple illustré, d'une butée de positionnement 170 qui saille de la face externe 117 de la plaque principale 116 et qui s'étend ici à distance de la deuxième protubérance 122.

Le porte-garniture 106 est agencée de sorte que la butée de positionnement 170 se trouve ici sensiblement en regard de la deuxième protubérance 122 et au moins partiellement en vis-à-vis de l'organe de manipulation 150.

La butée de positionnement 170 présente ici une forme sensiblement incurvée vers la deuxième protubérance 122 de sorte à former un logement 171.

Pour remplacer une garniture, il est nécessaire d'utiliser un outil, par exemple du type tournevis, en vue de passer le porte-garniture 106 respectif de sa configuration verrouillée (figures 5 à 8 et 11) à une configuration déverrouillée (figures 9 et 10).

En particulier, un tournevis 130 muni d'une tige 131 est ici utilisé.

La tige 131 du tournevis 130 est pourvue d'une extrémité 132 qui est ici introduite dans le logement 171 de la butée de positionnement 170, avec la tige 131 qui est mise en appui contre la face de déverrouillage 152 de l'organe de manipulation 150. Le tournevis 130 est alors dans une première position de déverrouillage.

Une force suffisante doit être exercée pour déplacer suffisamment l'organe de manipulation 150 et ainsi entrainer en mouvement l'organe de verrouillage et de déverrouillage 123 et donc la deuxième portion 125 de l'organe de sécurité 124 jusqu'à ce que cette dernière ne sollicite plus l'organe de verrouillage et de déverrouillage 123 vers la fenêtre 120 et donc vers la garniture (non visible), et que le doigt 128 soit extrait de la deuxième protubérance 122.

Sur la figure 8 est représentée la force F1 nécessaire à exercer avec le tournevis 130 pour déplacer l'organe de verrouillage et de déverrouillage 123 à l'encontre des forces F2 et F3 exercées par l'organe de sécurité 124.

Le tournevis 130 n'agit pas directement sur l'organe de sécurité 124, évitant ainsi toute détérioration de ce dernier.

D'ailleurs, dans l'exemple illustré, il n'est pas possible d'agir directement sur l'organe de sécurité 124 du fait de la présence de la paroi 160 formant obstacle qui empêche l'insertion de la tige 131 de tournevis 130.

En outre, la butée de positionnement 170 peut servir d'anti-ripage lors de l'actionnement du tournevis 130, sécurisant d'autant l'action de verrouiller ou déverrouiller le porte-garniture 106.

Sur la figure 9, le tournevis 130 est montré après actionnement, dans une deuxième position de déverrouillage. Cela montre qu'un encombrement E particulièrement réduit est nécessaire pour passer le porte-garniture 106 de sa configuration verrouillée à sa configuration déverrouillée.

Dans la configuration déverrouillée du porte-garniture 106, telle que visible sur les figures 9 et 10, les points d'attache de l'organe de sécurité 124 sont tels que cet organe se trouve dans une deuxième position stable dans laquelle il sollicite l'organe de verrouillage et de déverrouillage 123 à distance de la fenêtre 120 et donc de la garniture (non visible).

Autrement dit, le doigt 128 est extrait de la deuxième protubérance 122, l'organe de verrouillage et de déverrouillage 123 ne sollicite plus la garniture (non visible), qui peut ainsi être désinstallée du porte-garniture 106 pour son remplacement.

La figure 11 illustre le verrouillage du porte-garniture 106 après le remplacement de la garniture (non visible).

Le tournevis 130 passe donc d'une première position de verrouillage non représentée mais qui est identique à celle de la figure 10, sauf en ce que la tige 131 du tournevis 130 est en appui contre la face de verrouillage 151 de l'organe de manipulation 150 plutôt que contre sa face de déverrouillage 152, à une deuxième position de verrouillage visible sur la figure 11.

Autrement dit, il s'agit ici de solliciter l'organe de verrouillage et de déverrouillage 123 et sa deuxième portion 125 dans le sens inverse à celui des figures précédentes, en vue de rapprocher l'organe de verrouillage et de déverrouillage 123 de la fenêtre 120 et donc de la garniture (non visible).

Le porte-garniture 106 illustré sur la figure 12 diffère de celui illustré sur les figures 5 à 11 en ce qu'il est pourvu d'un organe de verrouillage et de déverrouillage 223 qui présente une patte de manipulation 280, ou portion de préhension, ayant un orifice traversant 281 plutôt que l'organe de manipulation décrit plus haut.

Dans cette variante, la tige de tournevis est introduite dans l'orifice traversant 281 plutôt que sur une face de verrouillage/déverrouillage.

Le mouvement est assez similaire pour passer le porte-garniture d'une configuration à l'autre.

Le porte-garniture 106 illustré sur la figure 13 diffère de celui illustré sur les figures 5 à 11 et de celui illustré sur la figure 12 en ce qu'il est pourvu d'un organe de verrouillage et de déverrouillage 323 qui présente une tige de manipulation 390, ou portion de préhension, fixée solidairement dans un trou 391 ménagé dans le crochet 328 plutôt que l'organe de manipulation ou la patte de manipulation décrits plus haut.

Dans cette variante, la tige de tournevis vient en appui contre un côté ou l'autre de la tige de manipulation 390 pour faire passer le porte-garniture d'une configuration à l'autre.

Des variantes non illustrées sont décrites ci-dessous.

Le porte-garniture peut être dépourvu de butée de positionnement et/ou de paroi formant obstacle.

Le porte-garniture peut être dépourvu de patte d'attache et/ou de zone d'attache et/ou de socle de montage tels que ceux décrits plus haut.

L'organe de sécurité présente une forme générale différente d'un U, par exemple un S. Il peut s'agir d'une épingle, ou d'une goupille.

Les première et deuxième protubérances peuvent ne pas former des charnons, mais plutôt par exemple des pattes sur lesquelles serait fixé l'organe de verrouillage et de déverrouillage.

La garniture peut être fixée avec un mécanisme rainure / nervure différent d'une forme en queue d'aronde, par exemple avec des nervures / rainures ayant des faces latérales circulaires, rectangulaires ou plus généralement en rampe.

Plus généralement, l'invention ne se limite pas aux exemples décrits et représentés.

## Revendications

1. Porte-garniture configuré pour équiper un système de freinage ferroviaire pour véhicule ferroviaire et pour agir sur au moins un organe de freinage dudit véhicule ferroviaire, comportant une plaque principale (116) ayant une face externe (117) et une face interne (118) opposée à la face externe (117), un organe de montage (119) ménagé sur la face interne (118) et configuré pour recevoir un organe de montage complémentaire d'une garniture équipant le système de freinage ferroviaire, et un mécanisme de verrouillage et de déverrouillage configuré pour installer/désinstaller et verrouiller/déverrouiller la garniture sur le porte-garniture (106), le mécanisme de verrouillage et de déverrouillage comportant un organe de verrouillage et de déverrouillage (123, 223, 323) monté articulé vis-à-vis de la plaque principale (116) et s'étendant selon une direction transversale du porte-garniture (106), et un organe de sécurité (124) assujetti mécaniquement d'une part à la plaque principale (116) et d'autre part à l'organe de verrouillage et de déverrouillage (123, 223, 323), avec le porte-garniture qui est configuré pour admettre une configuration verrouillée dans laquelle l'organe de sécurité (124) sollicite l'organe de verrouillage et de déverrouillage (123, 223, 323) vers la plaque principale (116) dans une position de verrouillage où l'organe de verrouillage et de déverrouillage (123, 223, 323) est configuré pour être en appui contre la garniture, et une configuration déverrouillée dans laquelle l'organe de sécurité (124) sollicite l'organe de verrouillage et de déverrouillage (123, 223, 323) pour le mettre à distance de la plaque principale (116) dans une position de déverrouillage où l'organe de verrouillage et de déverrouillage (123, 223, 323) est configuré pour être à distance de la garniture, le porte-garniture (106) étant **caractérisé en ce que** l'organe de verrouillage et de déverrouillage (123) est pourvu d'une portion de préhension (150, 280, 390) qui s'étend en saillie et transversalement au-delà de la plaque principale (116), et qui est configurée pour déplacer ensemble l'organe de verrouillage et de déverrouillage (123, 223, 323) et l'organe de sécurité (124) pour passer le porte-garniture (106) de l'une à l'autre de ses configurations verrouillée et déverrouillée, sous l'effet d'une sollicitation extérieure.

2. Porte-garniture selon la revendication 1, **caractérisé en ce que** la portion de préhension est formée par un organe de manipulation (150) qui présente une face de verrouillage (151) et une face de déverrouillage (152) opposée à la face de verrouillage (151).

3. Porte-garniture selon la revendication 2, **caractérisé en ce que** la face de verrouillage (151) et la face de déverrouillage (152) présentent une forme globalement incurvée, par exemple concave dirigée vers l'organe de manipulation (150), configurée pour faciliter le positionnement d'un outil.

4. Porte-garniture selon la revendication 1, **caractérisé en ce que** la portion de préhension est formée par une patte de manipulation (280) ayant un orifice traversant (281) pour l'introduction d'un outil.

5. Porte-garniture selon la revendication 1, **caractérisé en ce que** la portion de préhension est formée par une tige de manipulation (390) fixée solidairement dans un trou ménagé dans l'organe de verrouillage et de déverrouillage (323), tige de manipulation (390) contre laquelle vient en appui un outil pour faire passer le porte-garniture de l'une à l'autre de ses configurations verrouillée et déverrouillée.

6. Porte-garniture selon l'une quelconque des revendications 1 à 5, **caractérisé en ce qu'**il comporte une première protubérance (121) et une deuxième protubérance (122) ménagées en saillie de la face externe (117), et l'organe de verrouillage et de déverrouillage (123) est monté articulé sur la première protubérance (121) et s'étend selon la direction transversale depuis la première protubérance (121) jusqu'à la deuxième protubérance (122).

7. Porte-garniture selon l'une quelconque des revendications 1 à 6, **caractérisé en ce qu'**il comporte une fenêtre (120) ménagée dans la plaque principale (116) et débouchant de part d'autre dans la face interne (118) et dans la face externe (117) et située en regard de l'organe de montage (119).

8. Porte-garniture selon les revendications 6 et 7, **caractérisé en ce que** la première protubérance (121) et la deuxième protubérance (122) sont disposées de part et d'autre de la fenêtre (120), selon une direction transversale du porte-garniture (106).

9. Porte-garniture selon l'une quelconque des revendications 6 à 8, **caractérisé en ce qu'**il est pourvu d'une butée de positionnement (170) qui saille de la face externe (117) de la plaque principale (116) et qui s'étend ici à distance de la deuxième protubérance (122).

10. Porte-garniture selon la revendication 9, **caractérisé en ce que** la butée de positionnement (170) se trouve sensiblement en regard de la deuxième protubérance (122) et au moins partiellement en vis-à-vis de la portion de préhension (150, 280, 390).

11. Porte-garniture selon l'une des revendications 9 et 10, **caractérisé en ce que** la butée de positionnement (170) présente une forme sensiblement incurvée vers la deuxième protubérance (122) de sorte à former un logement (171) configuré pour accueillir une extrémité d'un outil.

12. Porte-garniture selon l'une quelconque des revendications 6 à 11, **caractérisé en ce qu'**il est pourvu d'une paroi (160) formant obstacle qui saille de la face externe (117) de la plaque principale (116) et qui s'étend à proximité immédiate de la deuxième protubérance (122).

13. Porte-garniture selon l'une quelconque des revendications 6 à 12, **caractérisé en ce que** l'organe de sécurité (124) est formé par un élément ressort filaire, du type épingle, dont une première portion (125) est assujettie mécaniquement à la deuxième protubérance (122) et une deuxième portion (126) est assujettie mécaniquement à l'organe de verrouillage et de déverrouillage (123).

14. Porte-garniture selon les revendications 12 et 13, **caractérisé en ce que** la paroi (160) formant obstacle s'étend entre la première portion (125) de l'organe de sécurité (124) partiellement introduite dans la deuxième protubérance (122) et la deuxième portion (126) de l'organe de sécurité (124) partiellement introduite dans un orifice (127) ménagé dans l'organe de verrouillage et de déverrouillage (123), de sorte que la paroi (160) formant obstacle empêche l'accès à un espace ménagé entre la première portion (125) et la deuxième portion (126) de l'organe de sécurité (124).

15. Porte-garniture selon l'une quelconque des revendications 13 et 14, **caractérisé en ce que** l'organe de verrouillage et de déverrouillage (123) présente à une extrémité opposée à celle par laquelle il est articulé à la plaque principale (116), un doigt (128) en forme de crochet qui définit un espace (129) pour le passage de la première portion (125) de l'organe de sécurité (124) lorsque le porte-garniture (106) est dans sa configuration verrouillée.

16. Porte-garniture selon la revendication 15, **caractérisé en ce que** la portion de préhension (150, 280, 390) s'étend en saillie du doigt (128) de sorte que dans la configuration verrouillée du porte-garniture (106), la portion de préhension (150, 280, 390) s'étend au-delà de la deuxième protubérance (122) et est accessible aisément.

17. Porte-garniture selon l'une quelconque des revendications 1 à 16, **caractérisé en ce que** l'organe de montage (119) est formé par une rainure longitudinale, par exemple en forme de queue d'aronde, formée dans la face interne (118).

18. Système de freinage pour véhicule ferroviaire à freins à au moins une garniture, pourvu d'une timonerie de freinage et d'au moins un porte-garniture (106) selon l'une quelconque des revendications 1 à 17, le système étant configuré pour agir sur des organes de freinage du véhicule, tel que par exemple des disques de frein, par l'intermédiaire de la timonerie de freinage et du au moins un porte-garniture (106) sur lequel est installée et verrouillée au moins une garniture.

19. Véhicule ferroviaire à freins à au moins une garniture, comportant un système freinage selon la revendication 18 et qui est configuré pour agir sur les organes de freinage du véhicule, tel que par exemple les disques de frein.

## Patentansprüche

1. Belagträger, der so konfiguriert ist, dass er ein Eisenbahnbremssystem für Schienenfahrzeuge ausstattet und auf mindestens ein Bremselement des Schienenfahrzeugs einwirkt, das eine Hauptplatte (116) mit einer Außenseite (117) und einer Innenseite (118) gegenüber der Außenseite (117), ein Montageelement (119), das an der Innenseite (118) angeordnet ist und so konfiguriert ist, dass es ein zusätzliches Montageelement für einen Belag aufnimmt, der das Eisenbahnbremssystem ausstattet, und einen Verriegelungs- und Entriegelungsmechanismus aufweist, der so konfiguriert ist, dass er den Belag auf dem Belagträger (106) installiert/deinstalliert und verriegelt/entriegelt, wobei der Verriegelungs- und Entriegelungsmechanismus ein gegenüber der Hauptplatte (116) gelenkig montiertes und sich in einer Querrichtung des Belagträgers (106) erstreckendes Verriegelungs- und Entriegelungselement (123, 223, 323) und ein Sicherheitselement (124) aufweist, das einerseits mechanisch an der Hauptplatte (116) und andererseits an das Verriegelungs- und Entriegelungselement (123, 223, 323) befestigt ist, wobei der Belagträger so konfiguriert ist, dass er eine verriegelte Konfiguration zulässt, bei der das Sicherheitselement (124) das Verriegelungs- und Entriegelungselement (123, 223, 323) zu der Hauptplatte (116) in eine Verriegelungsposition drückt, in der das Verriegelungs- und Entriegelungselement (123, 223, 323) so konfiguriert ist, dass es gegen den Belag anliegt, und eine entriegelte Konfiguration, bei der das Sicherheitselement (124) das Verriegelungs- und Entriegelungselement (123, 223, 323) von der Hauptplatte (116) weg in eine Entriegelungsposition drückt, in der das Verriegelungs- und Entriegelungselement (123, 223, 323) so konfiguriert ist, dass es von dem Belag entfernt ist, wobei der Belagträger (106) **dadurch gekennzeichnet ist, dass** das Verriegelungs- und Entriegelungselement (123) mit einem Griffabschnitt (150, 280, 390) versehen ist, der sich vorstehend und quer über die Hauptplatte (116) erstreckt und so konfiguriert ist, dass er das Verriegelungs- und Entriegelungselement (123, 223, 323) und das Sicherheitselement (124) zusammen bewegt, um den Belagträger (106) unter Einwirkung einer äußeren Beanspruchung von einer seiner verriegelten und entriegelten Konfigurationen in die andere zu bewegen.

2. Belagträger nach Anspruch 1, **dadurch gekennzeichnet, dass** der Griffabschnitt durch ein Handhabungselement (150) gebildet ist, das eine Verriegelungsseite (151) und eine der Verriegelungsseite (151) gegenüberliegende Entriegelungsseite (152) besitzt.

3. Belagträger nach Anspruch 2, **dadurch gekennzeichnet, dass** die Verriegelungsseite (151) und die Entriegelungsseite (152) eine insgesamt gekrümmte Form besitzen, beispielsweise konkav zu dem Handhabungselement (150) gerichtet, die so konfiguriert ist, dass sie die Positionierung eines Werkzeugs erleichtert.

4. Belagträger nach Anspruch 1, **dadurch gekennzeichnet, dass** der Griffabschnitt durch eine Handhabungslasche (280) mit einer Durchgangsöffnung (281) zum Einführen eines Werkzeugs gebildet ist.

5. Belagträger nach Anspruch 1, **dadurch gekennzeichnet, dass** der Griffabschnitt durch einen in einem Loch im Verriegelungs- und Entriegelungselement (323) fest fixierten Handhabungsstab (390) gebildet ist, wobei an dem Handhabungsstab (390) ein Werkzeug zum Bewegen des Belagträgers zwischen seinen verriegelten und entriegelten Konfigurationen anliegt.

6. Belagträger nach einem der Ansprüche 1 bis 5, **dadurch gekennzeichnet, dass** er eine erste Vorwölbung (121) und eine zweite Vorwölbung (122) aufweist, die vorstehend an der Außenseite (117) angeordnet sind, und das Verriegelungs- und Entriegelungselement (123) an der ersten Vorwölbung (121) gelenkig montiert ist und sich in Querrichtung von der ersten Vorwölbung (121) bis zu der zweiten Vorwölbung (122) erstreckt.

7. Belagträger nach einem der Ansprüche 1 bis 6, **dadurch gekennzeichnet, dass** er ein Fenster (120) aufweist, das in der Hauptplatte (116) angeordnet ist und auf der anderen Seite in die Innenseite (118) und in die Außenseite (117) mündet und sich gegenüber dem Montageelement (119) befindet.

8. Belagträger nach den Ansprüchen 6 und 7, **dadurch gekennzeichnet, dass** die erste Vorwölbung (121) und die zweite Vorwölbung (122) auf beiden Seiten des Fensters (120) in einer Querrichtung des Belagträgers (106) angeordnet sind.

9. Belagträger nach einem der Ansprüche 6 bis 8, **dadurch gekennzeichnet, dass** er mit einem Positionierungsanschlag (170) versehen ist, der aus der Außenseite (117) der Hauptplatte (116) herausragt und sich hier im Abstand zu der zweiten Vorwölbung (122) erstreckt.

10. Belagträger nach Anspruch 9, **dadurch gekennzeichnet, dass** sich der Positionierungsanschlag (170) im Wesentlichen gegenüber der zweiten Vorwölbung (122) und mindestens teilweise gegenüber dem Griffabschnitt (150, 280, 390) befindet.

11. Belagträger nach einem der Ansprüche 9 und 10, **dadurch gekennzeichnet, dass** der Positionierungsanschlag (170) eine in Richtung der zweiten Vorwölbung (122) im Wesentlichen gekrümmte Form besitzt, um ein Gehäuse (171) zu bilden, das so konfiguriert ist, dass es ein Ende eines Werkzeugs aufnimmt.

12. Belagträger nach einem der Ansprüche 6 bis 11, **dadurch gekennzeichnet, dass** er mit einer Wand (160) versehen ist, die ein Hindernis bildet, das aus der Außenseite (117) der Hauptplatte (116) herausragt und sich in unmittelbarer Nähe der zweiten Vorwölbung (122) erstreckt.

13. Belagträger nach einem der Ansprüche 6 bis 12, **dadurch gekennzeichnet, dass** das Sicherheitselement (124) durch ein Drahtfederelement vom Typ Stift gebildet ist, von dem ein erster Abschnitt (125) mechanisch an die zweite Vorwölbung (122) befestigt ist und ein zweiter Abschnitt (126) mechanisch an das Verriegelungs- und Entriegelungselement (123) befestigt ist.

14. Belagträger nach den Ansprüchen 12 und 13, **dadurch gekennzeichnet, dass** sich die Wand (160), die ein Hindernis bildet, zwischen dem ersten Abschnitt (125) des Sicherheitselements (124) erstreckt, der teilweise in die zweite Vorwölbung (122) eingeführt ist, und dem zweiten Abschnitt (126) des Sicherheitselements (124), der teilweise in eine Öffnung (127) eingeführt ist, die in dem Verriegelungs- und Entriegelungselement (123) vorgesehen ist, erstreckt, so dass die Wand (160), die ein Hindernis bildet, den Zugang zu einem zwischen dem ersten Abschnitt (125) und dem zweiten Abschnitt (126) des Sicherheitselements (124) angeordneten Raum verhindert.

15. Belagträger nach einem der Ansprüche 13 und 14, **dadurch gekennzeichnet, dass** das Verriegelungs- und Entriegelungselement (123) an einem Ende, das demjenigen gegenüberliegt, an dem es an der Hauptplatte (116) angelenkt ist, einen hakenförmigen Finger (128) besitzt, der einen Raum (129) für den Durchgang des ersten Abschnitts (125) des Sicherheitselements (124) definiert, wenn sich der Belagträger (106) in seiner verriegelten Konfiguration befindet.

16. Belagträger nach Anspruch 15, **dadurch gekennzeichnet, dass** sich der Griffabschnitt (150, 280, 390) in Richtung des Fingers (128) erstreckt, so dass sich in der verriegelten Konfiguration des Belagträgers (106) der Griffabschnitt (150, 280, 390) über die zweite Vorwölbung (122) hinaus erstreckt und leicht zugänglich ist.

17. Belagträger nach einem der Ansprüche 1 bis 16, **dadurch gekennzeichnet, dass** das Montageelement (119) durch eine in der Innenseite (118) ausgebildete Längsnut, beispielsweise in Schwalbenschwanzform, gebildet ist.

18. Bremssystem für Schienenfahrzeuge mit Bremsen mit mindestens einem Bremsbelag, versehen mit einem Bremsgestänge und mindestens einem Belagträger (106) nach einem der Ansprüche 1 bis 17, wobei das System so konfiguriert ist, dass es über das Bremsgestänge und den mindestens einen Belagträger (106), an dem mindestens ein Bremsbelag installiert und verriegelt ist, auf Bremselemente des Fahrzeugs, wie beispielsweise Bremsscheiben, einwirkt.

19. Schienenfahrzeug mit Bremsen mit mindestens einem Bremsbelag, das ein Bremssystem nach Anspruch 18 aufweist und das so konfiguriert ist, dass es auf die Bremselemente des Fahrzeugs, wie beispielsweise die Bremsscheiben, einwirkt.

## Claims

1. A brake shoe configured to equip a railway braking system for a railway vehicle and to act on at least one braking member of said railway vehicle, including a main plate (116) having an outer face (117) and an inner face (118) opposite to the outer face (117), a mounting member (119) provided on the inner face (118) and configured to receive a complementary member for mounting a lining equipping the railway braking system, and a locking and unlocking mechanism configured to install/remove and lock/unlock the lining onto/from the brake shoe (106), the locking and unlocking mechanism including a locking and unlocking member (123, 223, 323) hingedly mounted with respect to the main plate (116) and extending in a transverse direction of the brake shoe (106), and a safety member (124) mechanically fastened on the one hand to the main plate (116) and on the other hand to the locking and unlocking member (123, 223, 323), with the brake shoe configured to assume a locked configuration in which the safety member (124) stresses the locking and unlocking member (123, 223, 323) towards the main plate (116) into a locking position where the locking and unlocking member (123, 223, 323) is configured to be in abutment against the lining, and an unlocked configuration in which the safety member (124) stresses the locking and unlocking member (123, 223, 323) to place it at a distance from the main plate (116) into an unlocked position where the locking and unlocking member (123, 223, 323) is configured to be at a distance from the lining, the brake shoe (106) being **characterised in that** the locking and unlocking member (123) is provided with a gripping portion (150, 280, 390) which projects transversely beyond the main plate (116), and which is configured to move the locking and unlocking member (123, 223, 323) and the safety member (124) together in order to switch the brake shoe (106) from one of its locked and unlocked configurations to the other, when subjected to an external stress.

2. The brake shoe according to claim 1, **characterised in that** the gripping portion is formed by a handling member (150) which has a locking face (151) and an unlocking face (152) opposite to the locking face (151).

3. The brake shoe according to claim 2, **characterised in that** the locking face (151) and the unlocking face (152) have an overall curved shape, for example concave directed towards the handling member (150), configured to facilitate the positioning of a tool.

4. The brake shoe according to claim 1, **characterised in that** the gripping portion is formed by a handling lug (280) having a through port (281) for introducing a tool.

5. The brake shoe according to claim 1, **characterised in that** the gripping portion is formed by a handling rod (390) fixed integrally in a hole provided in the locking and unlocking member (323), against which handling rod (390) a tool comes in abutment in order to switch the brake shoe from one of its locked and unlocked configurations to the other.

6. The brake shoe according to any of claims 1 to 5, **characterised in that** it includes a first protrusion (121) and a second protrusion (122) provided projecting from the outer face (117), and the locking and unlocking member (123) is hingedly mounted to the first protrusion (121) and extends along the transverse direction from the first protrusion (121) to the second protrusion (122).

7. The brake shoe according to any of claims 1 to 6, **characterised in that** it includes a window (120) provided in the main plate (116) and opening on either side into the inner face (118) and into the outer face (117) and located facing the mounting member (119).

8. The brake shoe according to claims 6 and 7, **characterised in that** the first protrusion (121) and the second protrusion (122) are disposed on either side of the window (120), in a transverse direction of the brake shoe (106).

9. The brake shoe according to any of claims 6 to 8, **characterised in that** it is provided with a positioning stop (170) which projects from the outer face (117) of the main plate (116) and which here extends at a distance from the second protrusion (122).

10. The brake shoe according to claim 9, **characterised in that** the positioning stop (170) is substantially facing the second protrusion (122) and at least partially opposite the gripping portion (150, 280, 390).

11. The brake shoe according to one of claims 9 and 10, **characterised in that** the positioning stop (170) has a shape substantially curved towards the second protrusion (122) so as to form a housing (171) configured to accommodate one end of a tool.

12. The brake shoe according to any of claims 6 to 11, **characterised in that** it is provided with an obstacle-forming wall (160) which projects from the outer face (117) of the main plate (116) and which extends in the immediate proximity of the second protrusion (122).

13. The brake shoe according to any of claims 6 to 12, **characterised in that** the safety member (124) is formed by a wire spring element, of the hairpin type, a first portion (125) of which is mechanically fastened to the second protrusion (122) and a second portion (126) of which is mechanically fastened to the locking and unlocking member (123).

14. The brake shoe according to claims 12 and 13, **characterised in that** the obstacle-forming wall (160) extends between the first portion (125) of the safety member (124) partially introduced into the second protrusion (122) and the second portion (126) of the safety member (124) partially introduced into a port (127) provided in the locking and unlocking member (123), so that the obstacle-forming wall (160) prevents access to a space provided between the first portion (125) and the second portion (126) of the safety member (124).

15. The brake shoe according to any of claims 13 and 14, **characterised in that** the locking and unlocking member (123) has, at an end opposite to that by which it is hinged to the main plate (116), a hook-shaped finger (128) which defines a space (129) for passing the first portion (125) of the safety member (124) when the brake shoe (106) is in its locked configuration.

16. The brake shoe according to claim 15, **characterised in that** the gripping portion (150, 280, 390) extends projecting from the finger (128) so that, in the locked configuration of the brake shoe (106), the gripping portion (150, 280, 390) extends beyond the second protrusion (122) and is easily accessible.

17. The brake shoe according to any of claims 1 to 16, **characterised in that** the mounting member (119) is formed by a longitudinal groove, for example having a dovetail shape, formed in the inner face (118).

18. A braking system for a railway vehicle having brakes with at least one lining, provided with a brake linkage and at least one brake shoe (106) according to any of claims 1 to 17, the system being configured to act on braking members of the vehicle, such as for example brake discs, via the brake linkage and the at least one brake shoe (106) onto which at least one lining is installed and locked.

19. A railway vehicle having brakes with at least one lining, including a braking system according to claim 18 and which is configured to act on the braking members of the vehicle, such as, for example, the brake discs.
